# EUROPÄISCHE PATENTSCHRIFT

(11) **EP 1 882 679 B1**
(45) Veröffentlichungstag und Bekanntmachung des Hinweises auf die Patenterteilung: **15.04.2015**
(21) Anmeldenummer: 07014153.6
(22) Anmeldetag: 19.07.2007
(51) Int. Cl.: C05D 5/00, C05G 3/00, C05D 9/00, C05F 1/00, C05F 11/02

(54) **Verfahren zur Granulierung von Kieserit und Kieserit enthaltenden mineralischen Düngemitteln**
Method for granulation of kieserite and mineral fertiliser containing kieserite
Procédé destiné à la granulation de kiesérite et kiesérite comportant des engrais minéraux

(30) Priorität: 27.07.2006 DE 102006034621
(43) Veröffentlichungstag der Anmeldung: 30.01.2008
(73) Patentinhaber: K+S Aktiengesellschaft, 34111 Kassel (DE)
(72) Erfinder: Hoche, Antje, 36404 Vacha (DE); Naundorf, Wolfgang, Prof. Dr., 09599 Freiberg (DE); Stahl, Ingo, Dr. Prof., 34246 Vellmar (DE)

(56) Entgegenhaltungen:
- WO-A1-93/19023
- DD-A1- 144 165
- DE-C1- 3 618 058
- DATABASE WPI Week 197948 Thomson Scientific, London, GB; AN 1979-86678B XP002585727 & JP 54 135153 A (OCHI R) 20. Oktober 1979 (1979-10-20)
- DATABASE WPI Week 200029 Thomson Scientific, London, GB; AN 2000-331853 XP002585728 & JP 2000 095587 A (ONODA CHEM IND CO LTD) 4. April 2000 (2000-04-04)

## Beschreibung

Die Erfindung betrifft die Pressgranulierung von Kieserit und Kieserit enthaltenden mineralischen Düngemitteln. Die Erfindung kann auch zur Pressgranulierung von Kaliumchlorid, sulfatischem Kalium-Magnesium-Düngemittel (Kalimagnesia) und einer Mischung aus Konverterkalk, Dicalciumphosphat und Kaliumchlorid angewendet werden.

Der größte Teil der industriell hergestellten mineralischen Düngestoffe fällt im primären Gewinnungszustand feinkörnig an. Die Düngestoffe werden danach zur weiteren Verbesserung ihrer Gebrauchseigenschaften in Granulate mit unterschiedlichen Korngrößen von zumeist zwischen 1 bis 5 mm überführt. Die wichtigsten Vorteile der Granulate sind im Vergleich zu den feinkörnigen Düngestoffen das Vermeiden von Staubaufwirbelungen bei allen erforderlichen Handling-Prozessen, die wesentlich verbesserten Lager- und Streueigenschaften, die Beseitigung der Gefahr der Verschwemmung des ausgebrachten Düngers durch Starkregen sowie die deutlich verzögerte Auflösegeschwindigkeit der festen Granulatkörner. Das vermindert die Gefahr der Oberflächen- und/oder Grundwasserbelastung durch zu schnell aufgelöste Düngersalze. Des Weiteren können die Düngestoffe vollständiger und bedarfsgerechter über einen längeren Zeitraum verteilt für das Pflanzenwachstum genutzt werden. Die Schädigung der Pflanzen durch ein kurzzeitiges Überangebot an aufgelöstem Dünger bei Starkregen wird vermieden.

Die wichtigsten großtechnisch genutzten Verfahren zur Überführung von feinkörnigen Düngestoffen in feste Granulate mit Korngrößen von etwa 1 bis 5 mm sind die Kristallisationsverfahren aus übersättigten Lösungen, die Aufbauagglomeration nach dem Roll-Granulierverfahren mit Pelletiertellern oder Pelletiertrommeln, die Wirbelschichtgranulierung und das Kompaktier/Zerkleinerungsverfahren.

Die genannten Agglomerationsverfahren sind für die Granulierung von feinkörnigem Kieserit aus qualitativen, wirtschaftlichen und/oder stofflichen Gründen nicht geeignet. Das Kristallisationsverfahren ist teuer, zeitaufwändig und es entsteht ein polydisperses Produkt, das zur Verklumpung neigt. Das Roll-Granulierverfahren ist ungeeignet, weil der gegenüber Wassergehaltsschwankungen extrem sensible Kieserit in der Pelletiereinrichtung ständig verklumpt oder feste Anbackungen an den Wänden ausbilden würde, wenn der feinkörnige Kieserit mit der verfahrensbedingt notwendigen Pelletierflüssigkeit bedüst wird. Die Wirbelschichtgranulierung ist aus technischen, energetischen und ökonomischen Gründen zu aufwändig und für große Durchsatzleistungen schlecht geeignet. Des Weiteren besteht ständig die Gefahr, dass die frisch in der Wirbelschicht entstehenden Granulate in der oberflächenfeuchten Phase untereinander verklumpen. Die Folgen davon sind Betriebsstörungen und schlechte Produktqualität.

Das Kompaktier-/Zerkleinerungs-Verfahren, das weltweit in vielen Fabrikanlagen zur Granulierung von Kalidüngesalzen genutzt wird, ist in der gegenwärtig eingeführten Verfahrensgestaltung für die Granulierung von Kieserit nicht geeignet. Der Hauptgrund dafür ist, dass der Kieserit wegen seiner Sprödigkeit im getrockneten Zustand und wegen des fehlenden Bindevermögens selbst mit hohen Pressdrücken nicht zu festen Folien verpresst werden kann. Das wird durch viele wissenschaftliche Untersuchungen und Patente bestätigt.

Obschon in der DE 31 48 404 A1 die Möglichkeit zur Kompaktierung von Kieserit unter Zusatz von Natriumsulfat oder -carbonat, Alkalisilikaten, -boraten und - phos-phaten beschrieben wird, gelingt es bislang nicht, Kieserit zu hochwertigen Schülpen zu verpressen, weil er sich unter den üblichen Verpressungsbedingungen mit Doppelwalzenpressen mangels Verschiebbarkeit seiner Kristallgitterebenen untereinander nicht plastisch verformen lässt.

In der Offenlegungsschrift DE 35 41 184 A1 wird die Granulierung von Kieserit mit in Wasser unlöslichen Düngestoffen, wie z.B. Schlacken- und/oder Gesteinsmehlen beschrieben, was bei den benötigten Anwendungsmengen jedoch zu einer erheblichen Minderung des Nährstoffgehaltes an MgO führt führt.

Des Weiteren wird im Patent DE 11 83 058 B die Granulierung von zuvor fast vollständig thermisch entwässertem Kieserit beschrieben. Das Verfahren hat den Nachteil, dass der entwässerte Kieserit vorzeitig durch zu schnelles Abbinden durch Hydratisierung verfestigt. Auch der Einsatz von feuchten K₂SO₄-MgSO₄-Hydraten nach DE 21 06 212 B sowie von künstlichem Langbeinit (K₂SO₄ · MgSO₄) für Kalisalz-Kieserit-Mischungen gemäß DE 23 16 701 A1 führen nicht zu einem Granulat, das den heutigen Qualitätsanforderungen gewachsen ist.

Die Anwendung von Ammoniumsulfat als Granulierhilfsmittel nach DE 27 48 152 B2 führt erst nach längerer Reifezeit zu einer ausreichenden Verfestigung durch Hydratbildung. Außerdem führt der höhere Stickstoffgehalt zu einer Beschränkung in der Ausbringzeit.

DE 3618058 C1 offenbart ein Verfahren zum Granulieren von Düngemittel mit hohem Kieseritanteil, wobei Kieseritgranalien mit einem Kornspektrum mit einem Anteil von mindestens 20 % unter 0,09 mm, Befeuchtungsflüssigkeit, Mono- und/oder Disacchariden, zusammen mit gequollener Stärke gemischt und danach granuliert wird. Das Saccharid kann z. B. Lactose, Carboxymethylcellulose, ein Molkekonzentrat, Restflüssigkeit aus der Milcheiweißgewinnung oder Melasse sein. Die Befeuchtungsflüssigkeit ist Wasser und die Mischung vor der Granulierung enthält zwischen 6,5 und 10 Gewicht-% Wasser. Zur Granulierung wird das Gemisch gerollt und getrocknet bis zu einer Restfeuchte von 2 %.

Die Verwendung von Natrium-, Kalium- und Ammoniumdihydrogenphosphaten, -hydrogenphosphaten und -phosphaten sowie von wasserlöslichem Calciumdihydrogenphosphat wird im Patent DE 37 07 785 C1 vorgeschlagen. Die zur Bildung eines stabilen Granulats benötigten Mengen sowie die zum Abbinden durch Hydratbildung im Granulat verbleibende Wassermenge führt zu einer entsprechend hohen Verminderung des Wertstoffgehalts.

Im Patent DE 43 03 984 C1 wird der synergetische Effekt bei Mischung geringer Mengen mehrerer zuvor getesteter Granulierhilfsmittel beschrieben. So erhält man unter Verwendung von Saccharosen bzw. saccharosereicher Melasse aus der Zuckerindustrie, Borax, Ammoniumchlorid, Ammoniumsulfat, Ammoniumdihydrogenphosphat oder Ammoniumhydrogenphosphat sowie Stärke ein Granulat, das nach der Trocknung auf 0,5-2 % Restfeuchtigkeit, eine hohe Stabilität und keine überhöhten Stickstoff- und Borwerte aufweist. Von Nachteil ist die erhöhte Feuchtigkeitsaufnahme bei relativen Luftfeuchtigkeiten größer 60 %, was zu einem Aufquellen des Korns und somit zu einer verminderten Lagerstabilität führt.

Der Einsatz von Alkalihydroxiden nach DE 43 03 985 C1 führt zu einem langsam reifenden und sehr stabilen Granulat. Basische Granulierhilfsmittel bewirken jedoch eine Bildung von wasserunlöslichem Magnesiumhydroxid, was zu einer zusätzlichen Verminderung des pflanzenverfügbaren Magnesiums führt.

Es soll aus feinkörnigem Kieserit beziehungsweise kieserithaltigem Düngemittel ein Granulat hoher Dichte und Festigkeit erhalten werden. Dabei soll sich das Granulat durch geringe Staub- und Abriebbildung bei Umschlags-, Transport- und Dosierprozessen sowie durch gute Lagereigenschaften bei geringer Zerfalls- und Verklumpungsneigung sowie durch gute Verstreueigenschaften beim Ausbringen mit maschineller Technik auszeichnen. Demzufolge kann die zu lösende Aufgabe darin gesehen werden, ein effizienteres Granulierungsverfahren für Kieserit bereitzustellen. Eine weitere Aufgabe besteht darin, solche Granulate zu erzeugen, deren Feuchtigkeitsabgabe beziehungsweise deren Wasseraufnahme bei hohen Luftfeuchten so gering wie möglich ist.

Erfindungsgemäß wird die Aufgabe dadurch gelöst, dass der feinkörnige Kieserit beziehungsweise das kieserithaltige Düngemittel mit Kieseritanteilen > 40 % mit seinen ungünstigen Agglomerationseigenschaften durch eine spezielle Vorbehandlung in einen partiell plastifizierten Zustand gebracht wird, der es ermöglicht, das feinkörnige Düngemittel durch einen Druckformungsprozess in ein gewünschtes Format der Granulatkörner zu überführen.

Es wurde gefunden, dass durch eine partielle Befeuchtung mit Wasser bei dosiertem Zusatz von Stoffen, die als Gleitmittel wirksam werden, die zu granulierenden Partikel in einen Zustand gebracht werden, der einen nachfolgenden Druckformungsprozess ermöglicht. Wichtig ist, dass das Wasser und die Gleitmittel äußerst homogen auf die Oberflächen der feinkörnigen Kieseritpartikel verteilt werden. Eine Erwärmung der Mischgutkomponenten ist nicht notwendig, aber zulässig und vorteilhaft.

Das Wasser dient als Aufweichungs- und als Lösungsmittel. Es soll die Kieseritkristalle schwach plastifizieren und die Kornoberflächen der Partikel partiell anlösen. Die Granulierung wird erfindungsgemäß nur dann möglich, wenn die Intensität des partiellen Aufweichungs- und des Anlöseprozesses in einem eng bemessenen Variationsbereich eingestellt wird. Das wird in der richtigen Größenordnung durch die Einstellung des Wassergehaltes des zu granulierenden feinkörnigen Materials auf einen eng limitierten Wert von mindestens W = 8,5 ± 2 Masse-% und vorzugsweise W = 8,5 ± 0,5 Masse-% in äußerst homogener Verteilung des Wassers auf alle Partikel erreicht. Dabei ist es gleichgültig, ob das zu granulierende Material mit dem vorgegebenen Feuchtegehalt in der Produktion anfällt oder der Wassergehalt durch Abtrocknung von überschüssigem Wasser beziehungsweise durch Wiederbefeuchtung eingestellt wird.

Der Aufweichungs- und Anlöseprozess mit Wasser ist eine unabdingbar notwendige, aber allein nicht ausreichende Maßnahme für die Herstellung von hochwertigem Düngergranulat. Das wird nur erreicht, wenn der feinkörnige Kieserit zusätzlich mit einem geeigneten Gleitmittel in homogener Verteilung auf die Partikeloberflächen konditioniert wird. Das Wasser kann diese Aufgabe nicht allein erfüllen, weil der Reibungskoeffizient des zu granulierenden Materials auch bei partieller Befeuchtung groß bleibt und das Material bei stärkerer Befeuchtung wegen des schnellen Umschlages in den matschig-pastösen Zustand nicht mehr granulierbar ist. Als Gleitmittel sind alle Stoffe geeignet, die den Reibungskoeffizienten im Bereich der Kornoberflächen unter den Bedingungen des eng limitierten Wassergehaltes von W = 8,5 ± 2 Masse-% und vorzugsweise W = 8,5 ± 0,5 Masse-% deutlich verringern.

Es wurde des Weiteren gefunden, dass von der enorm großen Anzahl an bekannten Stoffen mit Gleitmittelwirkung nur die geeignet sind, die hydrophile Eigenschaften haben und die die Aushärtung des Granulates nicht durch das Abschirmen von Bindekräften und/oder durch Störung des Kristallisationsprozesses verhindern, wie das zum Beispiel beim Zusatz von Ölen, Fetten, Wachsen, Harzen, Paraffinen und anderen hydrophoben Stoffen und Stoffgemischen der Fall wäre.

Die Gleitmittel können Feststoffe, Lösungen, Suspensionen, Dispersionen oder Kleister sein. Es können Stoffe sein, die von Natur aus Gleitmitteleigenschaften haben oder durch geeignete Maßnahmen vor und/oder während des Granulierprozesses die Eigenschaft eines Gleitmittels erlangen. Viele Stoffe erlangen durch Feinstzerkleinerung, durch Aufweichen mit Wasser, den Zusatz von Hilfsstoffen, durch Aufschlussmahlung im wässrigem Milieu und/oder durch Erhitzen auf die jeweils rohstoffspezifisch optionale Temperatur die erforderlichen Gleitmitteleigenschaften.

Die Anzahl der Stoffe und Stoffgemische, die schon hydrophile Gleitmittel sind oder in geeignete Gleitmittel überführt werden können, ist enorm groß. Geeignete Rohstoffe sind alle stärke- und/oder eiweißreiche Stoffe oder Stoffgemische, alle jungtertiären erdigen Weichbraunkohlen mit hohen Gehalten an Huminsäuren und Huminstoffen, Torfe, Tapetenleim, Ton, Magerquark und viele stofflich ähnlichen Produkte allein oder in Gemisch beziehungsweise nach Zusatz von etwas Löschkalk. Der Anteil der Gleitmittel ist von der Stoffart und vom Habitus der eingesetzten Stoffe abhängig und beträgt auf die Trockensubstanz umgerechnet mindestens 0,5 Masse-%, bezogen auf die Menge zu granulierenden Gutes, und kann auf Werte von über 10 Masse-% erhöht werden. Das Wasser als Lösungsmittel und die Gleitmittel können getrennt nacheinander oder gleichzeitig beziehungsweise als Stoffgemische in Form von wasserhaltigen Feststoffen, Lösungen, Dispersionen und Kleistern mit dem Einsatzgut vermischt werden, wenn dabei der eng limitierte Wassergehalt von mindestens 8,5 ± 2 Masse-% und vorzugsweise 8,5 ± 0,5 Masse-% eingehalten wird.

Die unabdingbar notwendige genaue Einstellung des Wassergehaltes in der erforderlichen Gleichmäßigkeit sowie die homogene Verteilung des Gleitmittels auf die Oberflächen der Partikel werden nur mit einer dafür geeigneten Dosier- und Mischtechnik erreicht. Diese spezielle Dosier- und Mischtechnik ist erforderlich, weil schon durch wenig falsch verteiltes Wasser und Gleitmittel der Granulierprozess wegen lokal zu geringer Gleitfähigkeit, unzureichendem Bindevermögen oder Ausbildung pastöser Phasen nicht mehr gelingt. Die erforderliche Mischqualität wird erfindungsgemäß nur mit solchen Wirbelmischern erreicht, in denen das feinkörnige Material mit hoher Geschwindigkeit sowie mit hohem Kontaktdruck mit stabiler Relativbewegung zwischen den Partikeln bewegt wird. Des Weiteren muss der Dosierprozess so gestaltet werden, dass das Wasser und das Gleitmittel in feinster Verteilung und über einen längeren Zeitraum von etwa 30 bis 100 % der Gesamtmischdauer von 2 bis 5 Minuten in den Mischer dosiert wird. Unter den genannten Prozessbedingungen haben alle Partikel die Chance zur gleichmäßigen Aufnahme der relativ geringen Wasser- und/oder Gleitmittelmengen. Außerdem wird vorübergehend lokal zu viel aufgenommenes Wasser und/oder Gleitmittel durch die hohe Relativbewegung und den hohen Reibedruck zwischen den Partikeln nachträglich wieder vergleichmäßigt. Die genannten Bedingungen werden zum Beispiel vom sogenannten Eirich-Mischer erfüllt. Für die Zuführung von Flüssigkeiten hat sich die Verdüsung mit hoher Tropfenfeinheit und für die Zudosierung von Feststoffen die Zerstäubungstechnik bewährt. Eine besonders homogene Verteilung des Wassers wird durch Dampfkondensation erreicht.

Ein weiteres Merkmal des erfindungsgemäßen Granulierverfahrens ist die Druckformung des partiell plastifizierten und oberflächlich angelösten sowie mit Gleitstoffen konditionierten feinkörnigen Ausgangsstoffes. Durch die Druckformung wird das jeweils gewünschte Format der Granulatkörner geprägt. Des Weiteren ist für eine hohe Qualität des Granulates die Verdichtung der feinkörnigen Masse zu einem möglichst porenfreien Formkörper von Bedeutung. Durch die Druckformung wird das vorbehandelte feinkörnige Material zu einer möglichst lückenfrei geformten Masse verdichtet, in der die angelösten Partikeloberfllächen untereinander überlappend verschmelzen. Diese unerlässlich notwendige intensive Verdichtung ist nur beim Zusatz von Gleitmitteln möglich, weil ansonsten die Gleitverschiebung der Partikel untereinander wegen des zu großen Reibungswiderstandes zwischen den Kornoberflächen nicht für die erforderliche Gutverdichtung ausreichen würde. Für das Erreichen der hohen Gutverdichtung ist zudem eine beachtliche Partikeldeformation erforderlich. Die dafür notwendige Druckplastizität wird dem zu granulierenden Material durch die Befeuchtung auf W = 8,5 ± 2 Masse-% und vorzugsweise W = 8,5 ± 0,5 Masse-% verliehen. Die Verdichtung ist trotz der Konditionierung mit dem Gleitmittel und der partiellen Plastifizierung mit Wasser nur unter Druck möglich. Der auf das Gut einwirkende Pressdruck ist aber im Vergleich zum Kompaktier-ZerkleinerungsVerfahren niedrig und liegt im Bereich von ≤ 25 MPa.

Für die Herstellung von besonders hochwertigen Kieserit Düngergranulaten mit guten Handling-, Verstreu- und Auflöseeigenschaften ist es von Vorteil, wenn alle Granulatkörner ein ähnlich großes Format haben und die Oberflächen besonders stark verdichtet werden. Das wird erfindungsgemäß bestmöglich erreicht, wenn das partiell plastifizierte und mit Gleitmittel konditionierte Material mit den bekannten Flachmatrizen-Pelletpressen verpresst wird. Das erfindungsgemäß konditionierte Material wird zu zylinderförmigen Presslingen geformt und durch Druckeinwirkung verdichtet. Der Durchmesser der bei dieser Druckformung entstehenden Pellets kann durch Einsatz von Matrizen mit der jeweils erforderlichen Lochung leicht verändert werden. Qualitativ hochwertige Pellets entstehen erfindungsgemäß nur dann, wenn die Presslingstränge in den Formkanälen der Matrize unbedingt gleitend mit dem gewünschten Verschiebewiderstand bewegt werden. Ohne Einsatz von Gleitmitteln würden die Presslingsstränge in den Formkanälen durch extreme Schwankungen der Gleit- und Haftreibung zwischen der Formwand und den Strängen sehr ungleichmäßig und stark ruckartig oder phasenweise überhaupt nicht verschoben. Die Folge davon sind ungleichmäßig verdichtete und stark rissige Pellets mit stark abgeschrubbten Oberflächen. Im Extremfall kommt der Pelletierprozess durch anhaltende Verstopfung der Formkanäle ganz zum Erliegen. Unter optimalen Prozessbedingungen können mit dem Pelletierverfahren durch die homogene Gleitverschiebung unter Druck zwischen den Pelletsträngen und den Oberflächen der Presskanäle Düngergranulate hergestellt werden, die sich durch eine besonders stark verdichtete und geglättete Zylinderoberfläche auszeichnen. Das ist ein weiterer gewichtiger Grund für die hohe Produktqualität. Des Weiteren wird die hohe Produktqualität nur erreicht, wenn für die Druckformung eine Flachmatrizen-Pelletpresse verwendet wird und der Verdichtungsdruck durch einen gezielt einstellbaren Vordruck auf die Kollerwalzen der Pelletpresse in der erforderlichen Höhe veränderbar eingestellt werden kann.

Die Festigkeit der zylindrischen Pellets ist nach der Druckformung mit der Flachmatrizen-Pelletpresse noch gering. Die angestrebte hohe Festigkeit erlangen die Pellets erst durch die nachfolgende Trocknung. Durch die Wasserverdunstung kristallisiert der angelöste Kieserit in den bei der Druckformung überlappt verschmolzenen Grenzzonen aus und es entsteht ein fester Kristallisationsverbund zwischen den ehemaligen feinen Partikeln. Gleichzeitig verspröden die zuvor partiell plastifizierten Kristalle durch den Wasserentzug und verleihen den Granulatkörnern eine hohe Härte. Aus den genannten Gründen ist für den Granulierprozess kein Bindemittel erforderlich.

Für die Trocknung der Pellets sind Konvektions- und/oder Kontakttrockner geeignet. Die Pellets dürfen nicht zu schnell getrocknet werden, damit die Kristallisations- und Verhärtungsprozesse störungsfrei ablaufen können und die Granulate nicht durch zu hohe innere Dampfspannungen während der Trocknung geschwächt werden. Der Aushärtungsprozess ist abgeschlossen, wenn die Pellets auf einen Restwassergehalt von W ≤ Masse-3 % und vorzugsweise W ≤ 1,5 Masse-% getrocknet sind.

Nach dem Trocknungsprozess werden die Pellets durch schonende schlagende und brechende Zerkleinerung auf die gewünschte Länge gekürzt. Das bei der nachfolgenden Klassierung anfallende Fein- und Überkorn wird durch geeignete Kreislaufschaltung dem Pelletier- bzw. dem Zerkleinerungsprozess zugeführt. Bei Bedarf kann die Granulatnachbehandlung durch eine weitere Konditionierung zur weiteren Veränderung der Oberflächeneigenschaften ergänzt werden.

Die erhaltenen Granulate weisen die geforderten Eigenschaften auf. Die Erfindung wird nachfolgend anhand der Beispiele 1 bis 11 näher beschrieben.

### Beispiel 1:

Feinkörniger Kieserit mit einer Körnung von 0 bis 1 mm und mit einem Wassergehalt von W = 0,3 Masse-% wird mit 10 Masse-% Tapetenleimkleister im Eirich-Mischer vermischt. Der Tapetenleimkleister wurde durch Aufquellen von Tapetenleimpulver (chemisch Carboxylmethylzellulose) mit Wasser im Masseverhältnis von Leimpulver zu Wasser = 1:7 hergestellt. Der Tapetenleimkleister enthält das Wasser zur partiellen Plastifizierung der Kieseritkristalle und zum Anlösen der Kieseritkörner sowie den aufgequollenen Tapetenleim als Gleitmittel. Die Mischdauer beträgt insgesamt 180 s. In den ersten 90 s des Mischprozesses wird der Tapetenleimkleister gleichmäßig über die Zeit verteilt in den Mischer dosiert. Das Mischgut hat nach dem Mischprozess einen Wassergehalt von W = 8,2 Masse-%. Der Anteil des Gleitmittels beträgt 1,25 Masse-% bezogen auf Trockensubstanz. Das Mischgut wird danach mit einer Flachmatrizenpresse mit 4 mm-Bohrungen durch Druckformung zu dichten Pellets mit noch geringer Festigkeit verpresst. Die Pellets werden hart und fest, wenn sie im Trockenschrank mit 100°C heißer Luft auf einen Restwassergehalt von W ≤ 3 Masse-% und vorzugsweise W ≤ 1,5 Masse-% getrocknet werden. Bei einem Endwassergehalt der Pellets von W = 2,0 Masse-% haben die bei der Trocknung auf 3,8 mm geschrumpften Pellets nach 300 Umdrehungen des rotierenden Sturzrohres eine hohe Sturzfestigkeit von St 2 (300) = 96,1 %. Das bedeutet, dass nach der Sturzbeanspruchung noch 96,1 % der Körner eine Partikelgröße von d ≤ 2 mm haben.

Ähnlich positive Ergebnisse werden erzielt, wenn unter analogen Herstellungsbedingungen des Beispieles 1 statt Tapetenleimkleister folgende Kleister aus stärkreichen Getreidesorten die Funktionen des Plastifizierens, des Anlösens und der Gleitmittelwirkung übernehmen:
a) 10 Masse-% Kleister aus Weizenvollkornmehl und Wasser im Masseverhältnis von 1:8; 10 Minuten Aufquellung bei 100°C '
b) 9 Masse-% Kleister aus Roggenvollkornmehl und Wasser im Masseverhältnis von 1:8; 10 Minuten Aufquellung bei 100°C
c) 10 Masse-% Kleister aus Weizenvollkornmehl und Wasser im Masseverhältnis von 1:8; 10 Minuten Aufquellung bei 100°C. Vermischung des Kleisters mit 10 Masse-% Löschkalk

Alle drei Pelletsorten haben nach der Trocknung auf W ≤ 3 Masse-% eine hohe Sturzfestigkeit von St 2 (300) ≥ 96,0 %. Der Mehlbedarf beträgt etwa 1,1 Masse-%.

### Beispiel 2:

Feinkörniger Kieserit mit einer Körnung von 0 bis 1 mm und einem Wassergehalt von W = 0,3 Masse-% wird im Eirich-Mischer zunächst mit 8 Masse-% Wasser bedüst und danach mit 3 Masse-% Roggenvollkornmehl, bezogen auf die Menge Kieserit, bepudert. Bei dieser getrennten Zugabe der Hilfsstoffe wird das in sehr dünner Schicht aufgetragene Mehl durch das Aufsaugen von wenig Wasser zum schmierigen Gleitmittel. Die Gesamtmischdauer beträgt 240 s. Das mit einer Schlitzdüse verdüste Wasser wird in den ersten 90 s zugegeben. Die anschließende Zupuderung des Mehls dauert 60 s. Das Mischgut hat nach Abschluss des Mischprozesses einen Wassergehalt von W=8,1 Masse-%. Das Mischgut wird danach mit einer Flachmatrizen-Pelletpresse mit 4 mm-Bohrungen durch Druckformung zu dichten Pellets mit noch geringer Härte verpresst. Die Pellets sind hart und fest, wenn sie im Trockenschrank mit einer Lufttemperatur von 120°C auf einen Restwassergehalt von W = 0,6 Masse-% getrocknet werden. Die getrockneten Pellets haben eine hohe Sturzfestigkeit von St 2 (300) = 98,2 %.

Analog positive Ergebnisse werden erreicht, wenn statt Rogenvollkornmehl z.B. 3 Masse-% Weizenvollkornmehl oder 5 Masse-% Weizenkleie oder 5 Masse-% Weizengrieß oder 5 Masse-% Weizenschrotkleie oder 7,5 Masse-% Tonpulver zugemischt werden.

### Beispiel 3:

Feinkörniger Kieserit, der in der Produktion mit einem Wassergehalt von W = 9,1 Masse-% anfällt, wird im Eirich-Mischer mit 5 Masse-% Weizenvollkornmehl bepudert. Die Mischdauer beträgt 180 s. Die Mehlzugabe erfolgt in den ersten 120 s. Das Mischgut hat nach Abschluss des Mischprozesses einen Wassergehalt von W = 8,6 Masse-%. Das Mischgut wird mit einer Flachmatrizen-Pelletpresse mit 4 mm-Bohrungen durch Druckformung zu dichten Pellets geformt. Die Pellets haben nach der Trocknung auf einen Restwassergehalt von W = 1,1 Masse-% eine hohe Sturzfestigkeit von St 2 (300) = 96,8 %.

### Beispiel 4:

Feinkörniger Kieserit mit einer Körnung von 0 bis 1 mm und einem Wassergehalt von W = 0,3 Masse-% wird im Eirich-Mischer mit 10 Masse-% Magerquark vermischt. Der Magerquark enthält das Wasser zur partiellen Plastifizierung der Kieseritkristalle und zum Anlösen der Kieseritkörner sowie das Quarkkasein als Gleitmittel. Die Mischdauer beträgt 180 s. Der Quark wird in den ersten 90 s des Mischprozesses langsam zudosiert. Das Mischgut hat nach Beendigung des Mischprozesses einen Wassergehalt von W = 8,6 Masse-%. Das Mischgut wird danach mit einer Flachmatrizen-Pelletpresse mit 4 mm-Bohrungen durch Druckformung zu dichten Pellets verpresst. Nach der Trocknung haben die Pellets mit einem Restwassergehalt von W = 0,5 Masse-% eine hohe Sturzfestigkeit von St 2 (300) = 97,6 %.

Analog positive Ergebnisse werden erreicht, wenn statt Magerquark Dispersionen aus Extraktionsschroten verwendet werden, die bei der Ölgewinnung aus ölhaltigen Rohstoffen anfallen. Die Extraktionsschrote sind eiweißreich sowie sehr ölarm und damit hydrophil. Beispiele dafür sind Soja-Extraktionsschrot, Raps-Extraktionsschrot und Sonnenblumenkern-Extraktionsschrot. Die Dispersionen mit der erforderlichen hohen Feinheit werden durch Nassaufschlussmahlung von Extraktionsschrot und Wasser im Masseverhältnis von 1:5 in einer Schwingmühle bei einer Mahldauer von 5 Minuten hergestellt. Für die Herstellung der Dispersionen sind alle Kolloidmühlen geeignet. Der Kieserit wird mit 10 Masse-% Extraktionsschrot-Dispersion vermischt.

### Beispiel 5:

Feinkörniger Kieserit mit einer Körnung von 0 bis 1 mm und einem Wassergehalt von W = 0,3 Masse-% wird im Eirich-Mischer mit 12 Masse-% einer Dispersion aus aufgeschlossener jungtertiärer Weichbraunkohle vermischt. Die Rohbraunkohle mit einem Wassergehalt von W = 55 Masse-% wird zunächst mit einem Doppelschneckenextruder oder ähnlich geeigneten Maschinen durch Feinstzerkleinern aufgeschlossen. Danach wird die aufgeschlossene Rohkohle mit Wasser im Masseverhältnis von 1:0,5 durch kräftige Rührbeanspruchung zu einer dickbreiigen Masse dispergiert. Das Wasser in der Rohkohle und die Dispergierflüssigkeit plastifizieren die Kristallitkristalle und lösen die Kieseritkörner an. Die dispergierte Weichbraunkohle fungiert als Gleitmittel. Die Gesamtmischdauer beträgt 180 s. Die Rohkohle-Dispersion wird in den ersten 120 s des Mischverfahrens gleichmäßig über die Zeit verteilt zugegeben. Das Mischgut hat nach Abschluss des Mischprozesses einen Wassergehalt von W = 8,7 Masse-%. Der Anteil der Kohle als Gleitmittel beträgt bezogen auf Trockensubstanz nur 3,6 Masse-%. Das Mischgut wird danach mit der Flachmatrizen-Pelletpresse mit 4 mm-Bohrungen durch Druckformung zu dichten Pellets verpresst. Wegen der Trocknung der Pellets auf einen Restwassergehalt von W = 0,6 Masse-% haben sie eine hohe Härte und Festigkeit. Ihre Sturzfestigkeit beträgt St 2 (300) 96,2 %. Eine weitere Erhöhung der Sturzfestigkeit auf St 2 (300) > 97,0 % wird erreicht, wenn in die Rohkohle-Dispersion Melasse oder Löschkalk bzw. andere im Patent schon benannte Stoffe mit Gleitmittelwirkung zugemischt werden.

### Beispiel 6:

Feinkörniger Kieserit mit einer Körnung von 0 bis 1 mm und einem Wassergehalt von W = 0,3 Masse-% wird im Eirich-Mischer mit 15 Masse-% einer Ton-Suspension vermischt. Die Ton-Suspension wird aus Tonpulver mit W = 1,8 Masse-% und Wasser im Masseverhältnis von 1:1 durch kräftige Rührdispergierung hergestellt. Das Mischgut hat einen Wassergehalt von W = 8,1 Masse-%. Das Mischgut wird mit der Flachmatrizen-Pelletpresse zu 4 mm-Pellets verdichtet. Durch Trocknung auf einen Restwassergehalt von W = 0,9 Masse-% entstehen feste Pellets mit einer Sturzfestigkeit von St 2 (300) = 95,8 %

### Beispiel 7:

Feinkörniges 60er Kali® 'fein' mit einer Körnung von 0 bis 1 mm und mit einem Wassergehalt von W = 0,3 Masse-% wird mit 10 Masse-% Tapetenleimkleister im Eirich-Mischer vermischt. Der Tapetenleimkleister wurde durch Aufquellen von Tapetenleimpulver (chemisch Carboxylmethylzellulose) mit Wasser im Masseverhältnis von Leimpulver zu Wasser = 1:6 hergestellt. Die Mischdauer beträgt insgesamt 180 s. In den ersten 90 s des Mischprozesses wird der Tapetenleimkleister gleichmäßig über die Zeit verteilt in den Mischer dosiert. Das Mischgut wird danach mit einer Flachmatrizenpresse mit 4 mm-Bohrungen durch Druckformung zu dichten Pellets mit noch geringer Festigkeit verpresst. Die Pellets werden hart und fest, wenn sie im Trockenschrank mit 120°C heißer Luft getrocknet werden. Die Pellets haben nach 300 Umdrehungen des rotierenden Sturzrohres eine hohe Sturzfestigkeit von St 2 (300) = 98 %. Das bedeutet, dass nach der Sturzbeanspruchung noch 98 % der Körner eine Partikelgröße von d ≥ 2 mm haben.

### Beispiel 8:

Feinkörniges Kaliumchlorid mit ca. 99 % KCI, mit einer Körnung von 0 bis 1 mm und mit einem Wassergehalt von W = 0,3 Masse-%, wird mit 1 Masse-% Wasser im Eirich-Mischer vermischt. Die Mischdauer beträgt insgesamt 180 s, wobei in den ersten 90 s des Mischprozesses das Wasser gleichmäßig über die Zeit verteilt in den Mischer dosiert wird. Das Mischgut wird danach mit einer Flachmatrizenpresse mit 4 mm-Bohrungen durch Druckformung zu dichten Pellets mit noch geringer Festigkeit verpresst. Die Pellets werden hart und fest, wenn sie im Trockenschrank mit 80°C heißer Luft getrocknet werden. Die Pellets haben nach 300 Umdrehungen des rotierenden Sturzrohres eine hohe Sturzfestigkeit von St 2 (300) = 99 %.

### Beispiel 9:

Feinkörniges sulfatisches Kalium-Magnesium-Düngemittel (Kalimagnesia) mit einer Körnung von 0 bis 1 mm und mit einem Wassergehalt von W = 0,3 Masse-% wird mit 10 Masse-% Tapetenleimkleister im Eirich-Mischer vermischt. Der Tapetenleimkleister wurde durch Aufquellen von Tapetenleimpulver (chemisch Carboxylmethylzellulose) mit Wasser im Masseverhältnis von Leimpulver zu Wasser = 1:6 hergestellt. Die Mischdauer beträgt insgesamt 180 s. In den ersten 90 s des Mischprozesses wird der Tapetenleimkleister gleichmäßig über die Zeit verteilt in den Mischer dosiert. Das Mischgut wird danach mit einer Flachmatrizenpresse mit 4 mm-Bohrungen durch Druckformung zu dichten Pellets mit noch geringer Festigkeit verpresst. Die Pellets werden hart und fest, wenn sie im Trockenschrank mit 120°C heißer Luft auf einen Restwassergehalt von W = 2,9 Masse-% getrocknet werden Die Pellets haben nach 300 Umdrehungen des rotierenden Sturzrohres eine hohe Sturzfestigkeit von St 2 (300) = 97,5 %.

### Beispiel 10:

Feinkörniges kieserithaltiges Kalidüngemittel 32/10 (32 % K₂O in Form von Kaliumchlorid sowie 10 % MgO in Form von Kieserit) mit einer Körnung von 0 bis 1 mm und mit einem Wassergehalt von W = 0,3 Masse-% wird mit 10 Masse-% Tapetenleimkleister im EirichMischer vermischt. Der Tapetenleimkleister wurde durch Aufquellen von Tapetenleimpulver (chemisch Carboxylmethylzellulose) mit Wasser im Masseverhältnis von Leimpulver zu Wasser = 1:6 hergestellt. Die Mischdauer beträgt insgesamt 180 s. In den ersten 90 s des Mischprozesses wird der Tapetenleimkleister gleichmäßig über die Zeit verteilt in den Mischer dosiert. Das Mischgut wird danach mit einer Flachmatrizenpresse mit 4 mm-Bohrungen durch Druckformung zu dichten Pellets mit noch geringer Festigkeit verpresst. Die Pellets werden hart und fest, wenn sie im Trockenschrank mit 120°C heißer Luft getrocknet werden. Die Pellets haben nach 300 Umdrehungen des rotierenden Sturzrohres eine hohe Sturzfestigkeit von St 2 (300) = 99 %.

### Beispiel 11:

Eine feinkörnige Mischung aus Konverterkalk, Dicalciumphosphat und Kaliumchlorid mit einer Körnung von 0 bis 1 mm und mit einem Wassergehalt von W = 0,3 Masse-% wird mit 10 Masse-% Tapetenleimkleister im Eirich-Mischer vermischt. Der Tapetenleimkleister wurde durch Aufquellen von Tapetenleimpulver (chemisch Carboxylmethylzellulose) mit Wasser im Masseverhältnis von Leimpulver zu Wasser = 1:6 hergestellt. Die Mischdauer beträgt insgesamt 180 s. In den ersten 90 s des Mischprozesses wird der Tapetenleimkleister gleichmäßig über die Zeit verteilt in den Mischer dosiert. Das Mischgut wird danach mit einer Flachmatrizenpresse mit 4 mm-Bohrungen durch Druckformung zu dichten Pellets mit noch geringer Festigkeit verpresst. Die Pellets werden hart und fest, wenn sie im Trockenschrank mit 120°C heißer Luft getrocknet werden. Die Pellets haben nach 300 Umdrehungen des rotierenden Sturzrohres eine hohe Sturzfestigkeit von St 2 (300) = 96,8 %.

## Patentansprüche

1. Verfahren zur Pressgranulierung von Kieserit und Kieserit enthaltenden mineralischen Düngemitteln **dadurch gekennzeichnet, dass**
a) das feinkörnige mineralische Düngemittel in einer Vorbehandlungsstufe durch Einstellung eines Wassergehaltes von W = 8,5 ± 2 Masse-% partiell plastifiziert sowie unter Zusatz von hydrophilen Stoffen, die von Natur aus Gleitmitteleigenschaften haben oder durch eine Behandlung Gleitmitteleigenschaften erlangen, nämlich stärke- und/oder eiweißreiche Stoffe, jungtertiäre Weichbraunkohlen mit hohen Gehalten an Huminsäuren und Huminstoffen, Torfe, Tapetenleim, Ton oder kaolinreiche Stoffe, Magerquark oder andere eiweißreiche und fettarme Milchprodukte jeweils allein oder im Gemisch, umgerechnet auf Trockensubstanz in Mengen von mindestens 0,5 bis 10 Masse-% bezogen auf die eingesetzte mineralische Düngemittelmenge, konditioniert wird, wobei die Vorbehandlung des feinkörnigen mineralischen Düngemittels mit Wasser und den hydrophilen Stoffen in Mischern mit hoher Turbulenz erfolgt,
b) das konditionierte, plastifizierte mineralische Düngemittel aus Stufe a) einer Druckformung und Pressverdichtung mit einer Flachmatrizen-Pelletpresse unterzogen wird und Pelletstränge mit glatter, dichter Zylinderoberfläche entstehen,
c) die in Stufe b) erzeugten Pellets durch schonende Abtrocknung ausgehärtet werden und ein fester Granulatverbund entsteht.
d) die ausgehärteten zylinderförmigen Pelletstränge durch Brechen auf die gewünschte Granulatlänge gebracht werden.

2. Verfahren nach Anspruch 1 **dadurch gekennzeichnet, dass** das kieserithaltige mineralische Düngemittel einen Kieseritanteil > 40 % aufweist.

3. Verfahren nach Anspruch 1 **dadurch gekennzeichnet, dass** der Wassergehalt in der Vorbehandlungsstufe vorzugsweise auf W = 8,5 ± 0,5 Masse-% eingestellt wird, wobei bis zur Erreichung des geforderten Feuchtegehalts Wasser zugegeben wird oder bei Vorhandensein von Überschusswasser die entsprechende überschüssige Wassermenge bis zur Erreichung des geforderten Wassergehalts abgetrocknet wird.

4. Verfahren nach Anspruch 1 **dadurch gekennzeichnet, dass** als hydrophile Stoffe mit Gleitmitteleigenschaften Getreideprodukte oder Extraktionsschrote, die bei der Ölgewinnung aus ölhaltigen Rohstoffen anfallen jeweils allein oder im Gemisch zugesetzt werden.

5. Verfahren nach Anspruch 1 und 4 **dadurch gekennzeichnet, dass** die hydrophilen Stoffe, die nicht von Natur aus Gleitmitteleigenschaften aufweisen, durch vorherige Feinstzerkleinerung und/oder durch Auflösen und Aufweichen in Wasser und/oder durch Zusatz von Hilfsstoffen und/oder durch Nassaufschlussmahlung und/oder durch chemische Modifizierung und/oder durch Erhitzen die gewünschten Gleitmitteleigenschaften erlangen.

6. Verfahren nach Anspruch 1, 3, 4 und 5 **dadurch gekennzeichnet, dass** die Zugabe des Wassers und der Stoffe mit Gleitmitteleigenschaften getrennt nacheinander, gleichzeitig und/oder als einheitliche wasserhaltige Substanz in Form von Feststoffen, Lösungen, Suspensionen, Dispersionen oder Kleistern erfolgt.

7. Verfahren nach Anspruch 1, sowie 4 bis 6 **dadurch gekennzeichnet, dass** den hydrophilen Stoffen mit Gleitmitteleigenschaften andere Zusatzstoffe wie Löschkalk und Melasse zugemischt werden können.

8. Verfahren nach Anspruch 1 bis 7 **dadurch gekennzeichnet, dass** das Mischen des feinkörnigen mineralischen Düngemittels mit Wasser und den hydrophilen Stoffen mit Gleitmitteleigenschaften in der Vorbehandlungsstufe so erfolgt, dass das Mischgut mit hoher Geschwindigkeit, hohem Kontaktdruck zwischen den Partikeln sowie starker Relativgeschwindigkeit zwischen den Körnern anhaltend bewegt wird, wobei das Wasser und/oder die Stoffe mit Gleitmitteleigenschaften versprüht oder zerstäubt über eine Zeitspanne von mindestens 30 % und bis zu 100 % der Gesamtmischdauer von 3 bis 5 Minuten zudosiert werden.

9. Verfahren nach Anspruch 8 **dadurch gekennzeichnet, dass** vorzugsweise ein Eirich-Mischer eingesetzt wird.

10. Verfahren nach Anspruch 1 bis 8 **dadurch gekennzeichnet, dass** eine Erwärmung des Kieserits und/oder des kieserithaltigen Düngemittels und/oder des Wassers und/oder der Stoffe mit Gleitmitteleigenschaften vor oder während des Mischens erfolgen kann.

11. Verfahren nach Anspruch 1 **dadurch gekennzeichnet, dass** der Durchmesser der Pellets durch Veränderung der Lochweite der Formkanäle in den Flachmatrizen und die Länge der Granulate vorzugsweise durch schonende schlagende und brechende Beanspruchung der getrockneten Pellets bedarfsgerecht eingestellt wird.

12. Verfahren nach Anspruch 1, **dadurch gekennzeichnet, dass** für die Trocknung der Pellets alle Kontakt- und/oder Konvektionstrockner mit einer schonenden mechanischen Beanspruchung des Trocknungsgutes und mit schonendem Aufheizregime für eine störungsfreie Auskristallisation des Salzes im Pellet und zur Vermeidung von Mikro- und Makrorissen durch zu hohe innere Wärme- und Dampfspannungen geeignet sind.

13. Verfahren nach Anspruch 1 und 12 **dadurch gekennzeichnet, dass** die Trocknung bis auf Restwassergehalte von ≤ 3 Masse-% und vorzugsweise W ≤ 1,5 Masse-% erfolgt.

14. Verfahren nach Anspruch 1, 11, 12 und 13 **dadurch gekennzeichnet, dass** die gebrochenen ausgehärteten Pellets einem Klassierprozess unterzogen werden, um Über- und Unterkorn abzutrennen.

15. Verfahren nach Anspruch 1, 11, 12, 13 und 14 **dadurch gekennzeichnet, dass** die gebrochenen ausgehärteten Pellets bei Bedarf einer weiteren Oberflächenkonditionierung unterworfen werden.

16. Verfahren nach Anspruch 1 **dadurch gekennzeichnet, dass** Kaliumchlorid oder sulfatisches Kalium-Magnesium-Düngemittel (Kalimagnesia) oder eine Mischung aus Konverterkalk, Dicalciumphosphat und Kaliumchlorid granuliert werden.

## Claims

1. Press granulation process for kieserite and kieserite-containing mineral fertilizers, **characterized by**
a) the fine-grained mineral fertilizer being partially plasticized in a preliminary treatment stage by adjusting the water content to W = 8.5 ± 2 percent by mass, and conditioned by adding hydrophilic substances which have inherent lubricant qualities or can attain them by means of a treatment, namely substances rich in starch and/or protein, late tertiary soft brown coal with a high content of humic acid and humic matter, peats, wallpaper paste, clay or substances rich in kaolin, low-fat curd or other high-protein and low-fat dairy products, alone or in mixtures, in dry substance terms in quantities of 0.5 to 10 percent by mass as a minimum in relation to the quantity of fertilizer used, and with the pre-treatment of the mineral fertilizer with water and the hydrophilic substances performed in mixers with a high turbulence,
b) the conditioned, plasticized mineral fertilizer from stage a) being subjected to compression moulding and press compaction in a flat matrix pellet press, resulting in pellet strands with a smooth, dense cylinder surface,
c) the pellets created in b) being hardened by gentle drying, leading to a firm granulate bond.
d) the hardened cylinder-shaped pellet strands being brought to the desired granulate length by breaking.

2. Process as per claim 1, **characterized by** the kieserite-containing mineral fertilizer containing > 40 % kieserite.

3. Process as per claim 1, **characterized by** the water content preferably being adjusted to W = 8.5 ± 0.5 percent by mass in the pre-treatment stage, with water being added until the required moisture content is attained or, in case of excess water, the corresponding excess quantity of water being dried off until the required water content is attained.

4. Process as per claim 1, **characterized by** the hydrophilic substances with lubricating properties used being cereal products or extraction meals created in the extraction of oil from oleaginous raw materials, added on their own or in mixtures.

5. Process as per claims 1 and 4, **characterized by** hydrophilic substances with no inherent lubricating properties attaining the desired lubricant properties by prior ultra-fine comminution and/or dissolving and soaking in water and/or the addition of expedients and/or wet solubilization grinding and/or chemical modification and/or heating.

6. Process as per claims 1,3,4 and 5, **characterized by** the water and substances with lubricating properties being added separately one after the other, at the same time, and/or as a homogenous aqueous substance in the form of solids, solutions, suspensions, dispersions or pastes.

7. Process as per claims 1 and 4 to 6, **characterized by** the optional addition of other additives such as slaked lime and molasses to the hydrophilic substances with lubricating properties.

8. Process as per claims 1 to 7, **characterized by** the mixing of the fine-grained mineral fertilizer with water and the hydrophilic substances with lubricating properties in the pre-treatment stage being performed in a manner ensuring that the mixed material is kept in permanent motion at high speed, with high contact pressure between the particles and a high relative velocity between the grains, with the water and/or substances with lubricant properties being metered in by spraying or atomization over a period making up at least 30 % and up to 100 % of the total mixing time of 3 to 5 minutes.

9. Process as per claim 8, **characterized by** the preferable use of an Eirich mixer.

10. Process as per claims 1 to 8, **characterized by** the optional heating of the kieserite and/or kieserite-containing fertilizer and/or water and/or substances with lubricating properties before or during the mixing.

11. Process as per claim 1, **characterized by** the diameter of the pellets being adjusted to the requirements by changing the hole width of the moulding channels in the flat matrixes, and the length of the granulates preferably by gentle striking or breaking of the dried pellets.

12. Process as per claim 1, **characterized by** the suitability of all contact and/or convection driers with a gentle mechanical treatment of the material to be dried and a gentle heating regime for an undisturbed crystallization of the salt in the pellets and the avoidance of micro- and macro-cracks owed to excessive internal heat stress and vapour pressure for drying the pellets.

13. Process as per claims 1 and 12, **characterized by** drying to a residual water content of W ≤ 3 percent by mass and preferably W ≤ 1.5 percent by mass.

14. Process as per claims 1, 11, 12 and 13, **characterized by** the broken, hardened pellets being subjected to a grading process to segregate oversized and undersized grains.

15. Process as per claims 1, 11, 12, 13 and 14, **characterized by** the broken, hardened pellets being subjected to further surface conditioning as required.

16. Process as per claim 1, **characterized by** potassium chloride or sulphatic potassium-magnesium fertilizer (potash magnesia) or a mixture of converter lime, dicalcium phosphate and potassium chloride being granulated.

## Revendications

1. Procédé de granulation par pressage de kiesérite et de fertilisants minéraux contenant de la kiesérite, **caractérisé en ce que**
a) le fertilisant minéral à grain fin a, au cours d'une étape de prétraitement, été partiellement plastifié en utilisant une teneur en eau de E = 8,6 ± 2 % en masse et conditionné par ajout de substances hydrophiles possédant naturellement des propriétés d'agents de glisse ou acquérant des propriétés d'agents de glisse par traitement, à savoir des substances riches en amidon et/ou en protéines, des ortho-lignites du tertiaire supérieur aux teneurs élevées en acides humiques et en substances humiques, des tourbes, de la colle à papier peint, de l'argile ou des substances riches en kaolin, du séré maigre ou d'autres produits laitiers riches en protéines et pauvres en graisse, individuellement ou en mélange, convertis en substance sèche à hauteur d'au moins 0,5 à 10 % en masse en fonction de la quantité de fertilisant minéral utilisée, et **en ce que** le prétraitement du fertilisant minéral à grain fin se fait avec de l'eau et les substances hydrophiles dans des mélangeurs à forte turbulence,
b) le fertilisant minéral conditionné et plastifié à l'étape a) est soumis à un formage sous pression et à un pressage à l'aide d'une presse à granuler à filière plate, et **en ce que** des lignes de granulés à la surface cylindrique lisse et épaisse apparaissent ;
c) les granulés créés à l'étape b) sont durcis par séchage doux, et **en ce qu'**un groupement de granulés apparait,
d) les lignes de granulés cylindriques durcies sont amenées par concassage à la longueur de granulés souhaitée.

2. Procédé selon la revendication 1, **caractérisé en ce que** le fertilisant minéral contenant de la kiesérite présente une proportion de kiesérite > 40 %.

3. Procédé selon la revendication 1, **caractérisé en ce que**, au cours de l'étape de prétraitement, la teneur en eau est de préférence de E = 8,6 ± 2 % en masse, **en ce que** de l'eau est ajoutée jusqu'à l'obtention des taux d'humidité requis ou, en présence d'eau excédentaire, **en ce que** la quantité correspondante d'eau excédentaire est séchée jusqu'à l'obtention des teneurs en eau requises.

4. Procédé selon la revendication 1, **caractérisé en ce que** l'on utilise comme substances hydrophiles aux propriétés d'agents de glisse, individuellement ou en mélange, des produits céréaliers ou des tourteaux d'extraction résultant de l'oléifaction de matières premières oléagineuses.

5. Procédé selon les revendications 1 et 4, **caractérisé en ce que** les substances hydrophiles ne présentant pas naturellement de propriétés d'agents de glisse acquièrent les propriétés d'agents de glisse souhaitées par broyage très fin préalable et/ou par dissolution et détrempage dans de l'eau et/ou par ajout d'adjuvants et/ou par broyage par voie liquide et/ou par modification chimique et/ou par pyrogénation.

6. Procédé selon les revendications 1, 3, 4 et 5, **caractérisé en ce que** les ajouts de l'eau et des substances aux propriétés d'agents de glisse se font séparément et consécutivement, simultanément et/ou en tant que substance aqueuse unique sous la forme de substances grasses, de solutions, de suspensions, de dispersions ou de colle d'amidon.

7. Procédé selon la revendication 1, mais aussi les revendications 4 à 6, **caractérisé en ce que** d'autres adjuvants tels que de la chaux éteinte et de la mélasse peuvent être mélangés aux substances hydrophiles.

8. Procédé selon les revendications 1 à 7, **caractérisé en ce que** le mélange du fertilisant minéral à grain fin avec l'eau et les substances hydrophiles aux propriétés d'agents de glisse a lieu lors de l'étape de prétraitement, de telle sorte que l'enrobé est continuellement déplacé à grande vitesse, avec une forte pression de contact entre les particules ainsi qu'une grande vitesse relative entre les grains, et **en ce que** l'eau et les substances aux propriétés d'agents de glisse sont ajoutés par doses pulvérisées ou vaporisées pendant 3 à 5 minutes au cours d'une période allant d'au moins 30 % à 100 % de la durée totale de mélange.

9. Procédé selon la revendication 8, **caractérisé en ce que** l'on utilise de préférence un mélangeur Elrich.

10. Procédé selon les revendications 1 à 8, **caractérisé en ce qu'**un réchauffement de la kiesérite et/ou du fertilisant contenant de la kiesérite et/ou de l'eau et/ou des substances aux propriétés d'agents de glisse peut avoir lieu avant ou pendant le mélange.

11. Procédé selon la revendication 1, **caractérisé en ce que** le diamètre des pellets est déterminé selon les besoins en modifiant l'ouverture des canaux de formage dans les filières plates et la longueur des granulés, de préférence par contrainte douce par percussion et concassage des pellets séchés.

12. Procédé selon la revendication 1, **caractérisé en ce que** tous les sécheurs de contact et à convection conviennent au séchage des pellets par contrainte mécanique douce de la matière à sécher et par régime de chauffage doux afin d'obtenir une cristallisation parfaite du sel dans le pellet et afin d'éviter les micro- et macro-fissures résultant de contraintes thermiques et tensions de vapeur internes trop élevées.

13. Procédé selon les revendications 1 et 12, **caractérisé en ce que** le séchage se fait jusqu'à des teneurs en eau résiduelle ≤ 3 % en masse et de préférence E ≤ 1,5 % en masse.

14. Procédé selon les revendications 1, 11, 12 et 13, **caractérisé en ce que** les pellets concassés et durcis sont soumis à un processus de tri afin de séparer les grains trop gros et trop petits.

15. Procédé selon les revendications 1, 11, 12, 13 et 14, **caractérisé en ce que** les pellets concassés et durcis sont soumis au besoin à un conditionnement de surface supplémentaire.

16. Procédé selon la revendication 1, **caractérisé en ce que** du chlorure de potassium ou un fertilisant sulfaté à base de potassium et de magnésium (potasse magnésienne) ou un mélange d'amendement calcaire phosphaté, de phosphate dicalcique et de chlorure de potassium subissent une granulation.
